# EUROPEAN PATENT APPLICATION

(11) **EP 4 468 231 A1**
(43) Date of publication of application: **27.11.2024**
(21) Application number: 23826052.5
(22) Date of filing: 23.05.2023
(51) Int. Cl.: G06T 1/00

(54) **MODEL TRAINING METHOD, WATERMARK RESTORATION METHOD, AND RELATED DEVICE**

(30) Priority: 23.06.2022 CN 202210732239
(71) Applicant: Beijing Volcano Engine Technology Co., Ltd., Beijing 100190 (CN)
(72) Inventor: SUN, Weidi, Beijing 100028 (CN); GUO, Feng, Beijing 100028 (CN); SU, Xiaodong, Beijing 100028 (CN)
(74) Representative: Dentons UK and Middle East LLP
(86) International application number: PCT/CN2023/095675
(87) International publication number: WO 2023/246403

(57) **Abstract**

The present application provides a model training method, a watermark restoration method, and a related device. The training method comprises: obtaining watermark style information and background style information; performing combination according to the watermark style information and the background style information to generate a watermark image set; compressing a watermark image in the watermark image set to obtain a corresponding watermark compressed image, and respectively cropping the watermark image and the corresponding watermark compressed image to obtain a plurality of watermark image blocks corresponding to the watermark image and a plurality of watermark compressed image blocks corresponding to the positions of the watermark image blocks; using the watermark compressed image blocks as training samples, using the watermark image blocks corresponding to the positions of the watermark compressed image block positions as sample tags, and combining the training samples and the sample tags corresponding to training samples to generate a training data set; and constructing a neural network model, calling the training data set to train the neural network model by means of a convergence acceleration algorithm to obtain a neural network model meeting a training end condition as a watermark restoration model.

## Description

The present application claims the priority to the Chinese patent application No. 202210732239.2 entitled "MODEL TRAINING METHOD, WATERMARK RESTORATION METHOD, AND RELATED DEVICE" and filed in the Chinese National Intellectual Property Office on June 23, 2022, the entirety of which is incorporated by reference into the present application.

### TECHNICAL FIELD

The present application relates to the technical field of image processing, and particularly to a model training method, a watermark restoration method, and a related device.

### BACKGROUND

In the related art, by adding visible-watermark marks in various digital images, source information of the images can be quickly known, for example, acquiring related information of an image copyright owner.

However, in the process of image transmission, the image often needs to be compressed and then transmitted; however, in order to ensure a visual effect of normal images, the watermark part is designed to be light in color and small in size, so that after the compression, content of the watermark becomes blurred and cannot be traced.

### SUMMARY

In view of this, an objective of the present application is to provide a model training method, a watermark restoration method, and a related device, so as to solve or partially solve the above technical problems.

Based on the above objective, a first aspect of embodiments of the present application provides a training method for a watermark restoration model, comprising:
acquiring watermark style information and background style information, the watermark style information being used for indicating a visible-watermark character content style; and the background style information being used for indicating a background image content style;
generating a watermark image set according to a combination of the watermark style information and the background style information, the watermark image set comprising a plurality of images with visible watermarks;
compressing a watermark image in the watermark image set to obtain a corresponding watermark compressed image, and respectively cropping the watermark image and the corresponding watermark compressed image to obtain a plurality of watermark image blocks corresponding to the watermark image and a plurality of watermark compressed image blocks in position correspondence with the watermark image blocks;
by using the watermark compressed image blocks as training samples and using the watermark image blocks in position correspondence with the watermark compressed image block as sample labels, combining the training samples and the sample labels corresponding to the training samples to generate a training data set; and
constructing a neural network model, and training the neural network model by means of a convergence acceleration algorithm by calling the training data set to obtain a neural network model meeting a training termination condition as a watermark restoration model, the watermark restoration model being used for restoring visible-watermark characters in the image.

Based on the same inventive concept, a second aspect of the embodiments of the present application provides a watermark restoration method, comprising:
acquiring a target image, and cropping the target image to obtain a plurality of target image blocks with position rankings;
respectively processing the plurality of target image blocks by calling a pre-trained watermark restoration model to obtain restored image blocks corresponding to the target image blocks; wherein, the watermark restoration model is trained based on a watermark image set synthesized by predefined watermark style information and background style information, and the watermark restoration model is used for restoring visible watermark characters in the image; and
according to the position rankings of the plurality of target image blocks, performing position stitching on the restored image blocks corresponding to the target image blocks to obtain a target image restoration result.

Based on the same inventive concept, a third aspect of the embodiments of the present application provides a training apparatus for a watermark restoration model, comprising:
a watermark and background acquisition module, configured to acquire watermark style information and background style information, the watermark style information being used for indicating a visible-watermark character content style; and the background style information being used for indicating a background image content style;
a watermark image generation module, configured to generate a watermark image set according to a combination of the watermark style information and the background style information, the watermark image set comprising a plurality of images with visible watermarks;
a compression processing module, configured to compress a watermark image in the watermark image set to obtain a corresponding watermark compressed image, and respectively crop the watermark image and the corresponding watermark compressed image to obtain a plurality of watermark image blocks corresponding to the watermark image and a plurality of watermark compressed image blocks in position correspondence with the watermark image blocks;
a training sample determination module, configured to, by using the watermark compressed image blocks as training samples and using the watermark image blocks in position correspondence with the watermark compressed image blocks as sample labels, combine the training samples and the sample labels corresponding to the training samples to generate a training data set; and
a training module, configured to construct a neural network model, and train the neural network model by means of a convergence acceleration algorithm by calling the training data set to obtain a neural network model meeting a training termination condition as a watermark restoration model, the watermark restoration model being used for restoring visible-watermark characters in the image.

Based on the same inventive concept, a fourth aspect of the embodiments of the present application provides a watermark restoration apparatus, comprising:
an image acquisition module, configured to acquire a target image, and crop the target image to obtain a plurality of target image blocks with position rankings;
a watermark restoration module, configured to, respectively process the plurality of target image blocks by calling a pre-trained watermark restoration model to obtain restored image blocks corresponding to the target image blocks; wherein, the watermark restoration model is trained based on a watermark image set synthesized by predefined watermark style information and background style information, and the watermark restoration model is used for restoring visible watermark characters in the image; and
a stitching module, configured to, according to the position rankings of the plurality of target image blocks, perform position stitching on the restored image blocks corresponding to the target image blocks to obtain a target image restoration result.

Based on the same inventive concept, a fifth aspect of the embodiments of the present application provides an electronic device, comprising a memory, a processor, and a computer program stored on the memory and executable on the processor, the processor, when executing the computer program, implementing the method of the first or second aspect.

Based on the same inventive concept, a sixth aspect of the embodiments of the present application provides a non-transitory computer-readable storage medium storing computer instructions, for causing a computer to perform the method of the first or second aspect.

Based on the same inventive concept, a seventh aspect of the embodiments of the present application provides a computer program product, comprising computer program instructions which, when run on a computer, cause the computer to execute the method of the first or second aspect.

As can be seen from the above, according to the model training method, watermark restoration method, and related device provided in the embodiments of the present application, watermark text can be added into a plurality of background images to obtain watermark images, so that this automatic generation mode has high speed, low generation cost, a relatively random number of the generated watermark images, and watermark content in the generated watermark image is determined according to a specified visible-watermark character content style, making it easy for a subsequent model training process. The obtained watermark images are then subjected to compression processing to obtain watermark compressed images, and these watermark compressed images are marked therein with corresponding watermark content and then used as a training data set, to perform learning training on a constructed neural network, so that the neural network has continuously improved accuracy of watermark restoration in the training process, and after the training is finished, a watermark restoration model performing watermark restoration on the compressed watermark image can be obtained. The watermark restoration model obtained by this solution can accurately perform watermark restoration on the compressed watermark image, and has a restoration effect with high accuracy, so that the watermark content in the compressed watermark image can be accurately restored even if it is blurred, and then accuracy of tracing according to the watermark content is ensured.

### BRIEF DESCRIPTION OF THE DRAWINGS

In order to more clearly illustrate the technical solutions of the present application or the related art, the drawings to be used in the description of the embodiments or the related art will be briefly introduced below, and it is obvious that the drawings in the following description are only embodiments of the present application, and for one of ordinary skill in the art, other drawings can be obtained according to these drawings without paying creative labor.
Fig. 1 is a schematic diagram of an application scenario according to an embodiment of the present application;
Fig. 2 is a flow diagram of a training method for a watermark restoration model according to an embodiment of the present application;
Fig. 3A is a flow diagram of a watermark restoration method according to an embodiment of the present application;
Fig. 3B is a schematic diagram of a watermark restoration image according to an embodiment of the present application;
Fig. 4 is a structural block diagram of a training apparatus for a watermark restoration model according to an embodiment of the present application;
Fig. 5 is a structural block diagram of a watermark restoration apparatus according to an embodiment of the present application;
Fig. 6 is a schematic structural diagram of an electronic device according to an embodiment of the present application.

### DETAILED DESCRIPTION

The principles and spirit of the present application will be described with reference to several exemplary embodiments. It should be understood that these embodiments are given only to enable those skilled in the art to better understand and then implement the present application, and do not limit the scope of the present application in any way. Rather, these embodiments are provided to make the present application thorough and complete, and to fully convey the scope of the present application to those skilled in the art.

Herein, it should be understood that the number of any element in the drawings is used for example rather than limitation, and any name is used for distinction only and does not have any restrictive meaning.

The principles and spirit of the present application are explained in detail below with reference to several exemplary embodiments of the present application.

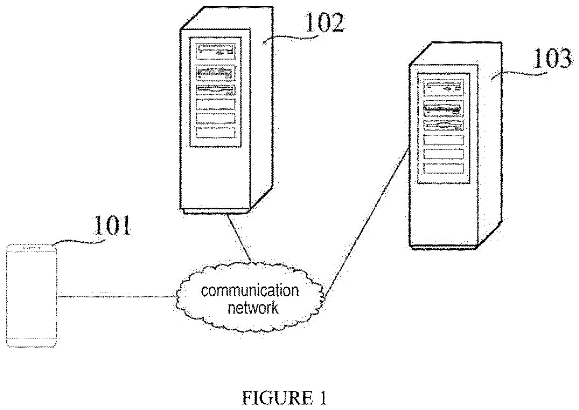

Referring to Fig. 1, it is a schematic diagram of an application scenario for a training method for a watermark restoration model and a watermark restoration method according to an embodiment of the present application. The application scenario includes a terminal device 101, a server 102, and a data storage system 103. The terminal device 101, the server 102, and the data storage system 103 may be connected through a wired or wireless communication network. The terminal device 101 includes, but is not limited to, a desktop computer, a mobile phone, a mobile computer, a tablet computer, a media player, a smart wearable device, a personal digital assistant (PDA), or other electronic devices capable of implementing the above functions, etc. The server 102 and the data storage system 103 may both be an independent physical server, or a server cluster or a distributed system formed by a plurality of physical servers, or a cloud server providing a basic cloud computing service such as a cloud service, a cloud database, cloud computing, a cloud function, cloud storage, a network service, cloud communication, a middleware service, a domain name service, a security service, CDN, and big data and an artificial intelligence platform.

The server 102 can acquire watermark style information and background style information; generate a watermark image set according to a combination of the watermark style information and the background style information, the watermark image set comprising a plurality of images with visible watermarks; and compress a watermark image in the watermark image set to obtain a corresponding watermark compressed image, and respectively crop the watermark image and the corresponding watermark compressed image to obtain a plurality of watermark image blocks corresponding to the watermark image and a plurality of watermark compressed image blocks in position correspondence with the watermark image blocks . By using the watermark compressed image blocks as training samples and using the watermark image blocks in position correspondence with the watermark compressed image blocks as sample labels, the training samples and the sample labels corresponding to the training samples are combined to generate a training data set. This automatic generation mode has high speed, low generation cost and a relatively random number of the generated watermark images, and watermark content in the generated watermark image is determined according to a specified visible-watermark character content style, making it easy for a subsequent model training process. The server 102 inputs these training data sets into a pre-constructed neural network model for learning and training processing to obtain a watermark restoration model capable of performing watermark restoration on the compressed watermark image. Then, the server 102 receives a compressed target image that is sent by the terminal device 101, inputs this target image into the watermark restoration model for restoration processing to obtain a restored watermark image, and sends the restored watermark image to the terminal device 101. The data storage system 103 provides data storage support for the work and operation of the server 102, such as for storing program code that can implement the above process.

A training method for a watermark restoration model and a watermark restoration method according to an exemplary embodiment of the present application are described below in conjunction with the application scenario of Fig. 1. It should be noted that the above application scenario is only presented to facilitate understanding of the spirit and principles of the present application, and the embodiments of the present application are not limited in this respect. Rather, the embodiments of the present application may be applied to any applicable scenario.

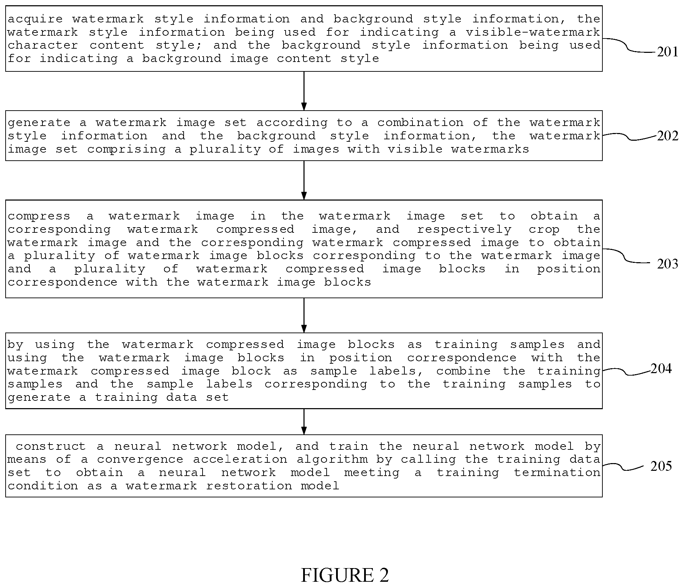

An embodiment of the present application provides a training method for a watermark restoration model. As shown in Fig. 2, the method comprises:
step 201, acquiring watermark style information and background style information, the watermark style information being used for indicating a visible-watermark character content style; and the background style information being used for indicating a background image content style.

In some embodiments, the step 201 comprises:
step 2011, presenting a watermark style information configuration interface and a background style information configuration interface; the watermark style information configuration interface being used for configuring at least one of watermark content, watermark color, watermark font, watermark size, or watermark gradient; and the background style information interface being used for configuring background color and/or background content;
step 2012, receiving the watermark style information configured by a user by means of the watermark style information configuration interface, and receiving the background style information configured by the user by means of the background style information configuration interface.

In a specific implementation, watermark compressed images may be compressed watermark images in a library. However, the process of acquisition from the library is complex, needs retrieving from a plurality of libraries, and the retrieved images are different in size and format, making it difficult to perform a subsequent training process. To avoid this, the present application chooses to automatically generate watermark compressed images.

A set background style may include: set background color, background pattern, blind watermark, texture, or the like. A plurality of background images obtained may be the same or different. Watermarks are added to the plurality of background images according to a set watermark style to obtain a plurality of watermark images. The set watermark style includes: watermark content, watermark color (RGBA), watermark font, watermark size, watermark gradient, etc. After some random factors (such as random close font size, random increase and decrease in watermark transparency, random adjustment of watermark gradient, and random adjustment of watermark position) within a certain range are added, a batch of watermark images (i.e. digital images containing visible watermarks) are generated.

Moreover, in order to ensure that more than half of subsequently cropped image blocks have watermark traces, watermarks in the watermark image need to be made densely.

Step 202, generating a watermark image set according to a combination of the watermark style information and the background style information, the watermark image set comprising a plurality of images with visible watermarks.

Compared with collecting watermark images, the manner of automatically synthesizing the watermark images has lower cost and higher speed for generating the watermark images, a relatively random number of the generated watermark images, without privacy problem that needs to be faced by collecting watermark images, and the synthesized watermark image is hardly different from the collected one.

In some embodiments, after obtaining the watermark images, the following solution may be further comprised:
randomly adjusting the watermark images in the watermark image set by calling a watermark adjustment strategy to obtain an adjusted watermark image set, the watermark adjustment strategy being used for randomly extracting the watermark images and randomly adjusting at least one dimension of watermark font size, watermark transparency, watermark gradient, or watermark position.

Step 203, compressing the watermark image in the watermark image set to obtain a corresponding watermark compressed image, and respectively cropping the watermark image and the corresponding watermark compressed image to obtain a plurality of watermark image blocks corresponding to the watermark image and a plurality of watermark compressed image blocks in position correspondence with the watermark image blocks.

Step 204, by using the watermark compressed image blocks as training samples and using the watermark image blocks in position correspondence with the watermark compressed image blocks as sample labels, combining the training samples and the sample labels corresponding to the training samples to generate a training data set.

In a specific implementation, a real compression environment (for example, compression software or instant messaging software) can be simulated to compress the obtained watermark image to obtain the watermark compressed image.

This generation process of the automatically generated watermark compressed image is simple and quick, and the content of the watermark image before the compression corresponding to the watermark compressed image is known, facilitating the subsequent determination of labels for marking.

In a specific implementation, the watermark image before the compression can be directly taken as the watermark content, and the watermark in the watermark image before the compression can also be extracted as the watermark content. An association of the watermark content as the label with the watermark compressed image can in a form of a key value pair, table, connector, or the like, so that the training data set can be obtained.

Each watermark image before the compression is cropped according to a preset size to obtain a plurality of image blocks before the compression, each watermark compressed image is cropped according to a preset size to obtain a plurality of image blocks after the compression, and the image blocks before the compression, as labels, are associated with the corresponding image blocks after the compression to form the training data set.

In a specific implementation, due to a relatively small memory capacity and processing speed of the processor of the terminal device or the server, it is unable to process the whole watermark image, and therefore, both the watermark image before the compression and the watermark compressed image need to be cropped into square image blocks (i.e., the image blocks before the compression and the image blocks after the compression) according to a preset size (e.g., 48*48 or 96*96 or another size). In addition, up-sampling processing is performed on the watermark image before the compression by increasing sampling points, so that the definition of the watermark image before the compression is improved, making it easier to recognize the watermark. Moreover, in order to ensure the training effect of the neural network, more than half of the cropped image blocks contain watermark traces.

The image blocks after the compression and the image blocks before the compression, obtained by cropping, are in mutual correspondence in positions, the cropped image blocks after the compression are gathered together as an input set, and the cropped image blocks before the compression are gathered together as a label set. The input set and the label set are taken as the training data set.

Step 205, constructing a neural network model, and training the neural network model by means of a convergence acceleration algorithm by calling the training data set to obtain a neural network model meeting a training termination condition as a watermark restoration model.

In a specific implementation, the neural network, which includes: an input layer, a plurality of hidden layers and an output layer, has a certain self-learning ability. The image blocks after the compression in the input set of the training data set are input into the neural network for training to obtain a processed result, the processed result is compared with the corresponding image blocks before the compression in the label set, a loss function is calculated according to the comparison result, and the neural network is trained according to the loss function. Finally, a watermark restoration model is obtained after the training is finished, watermark restoration processing can be performed on the compressed image by using the watermark restoration model, and the watermark image has a high restoration degree.

In some embodiments, the step 205 comprises:
step 2051, constructing a deep super-resolution model based on a neural network.

The deep super-resolution model is constructed based on a convolutional neural network (CNN) . The deep super-resolution model comprises at least one of:
VDSR, LapSRN, SRMD, EDSR, DBPN, RDN, or SAN, where the SAN is preferred.

The VDSR has a full name of: Very Deep Super-Resolution;
the LapSRN has a full name of: Laplacian Super-Resolution Networks;
the SRMD has a full name of: Super-Resolution Multiple Degradations;
the EDSR has a full name of: Enhanced Deep Super-Resolution;
the DBPN has a full name of: Deep Back-Projection Networks For Super-Resolution;
the RDN has a full name of: Residual Dense Network;
the SAN has a full name of: Second-order Attention Network.

Step 2042, calling the training data set, and performing training iteration on the deep super-resolution model by means of an adaptive moment estimation optimizer to obtain a model meeting a training termination condition as a watermark restoration model.

In some embodiments, an L1 norm loss function is calculated according to the training processing result and the watermark content in the corresponding label, and parameters of the layers of the neural network are adjusted according to the L1 norm loss function.

The L1 norm loss function is also called a minimum absolute deviation, or a minimum absolute error. In general, it minimizes the sum of an absolute difference between a target value (e.g., the watermark content in the label) and an estimated value (the training processing result) . The use of the L1 norm loss function can ensure the more and more accurate adjustment of the parameters of the layers of the neural network.

In some embodiments, the convergence of the neural network is accelerated by using a convergence acceleration algorithm in the corresponding training process.

In some embodiments, the convergence acceleration algorithm comprises at least one of:
an adaptive moment estimation optimizer algorithm (Adam optimizer), a warmup algorithm strategy (warmup), and a step learning rate strategy (StepLR). In this embodiment, an adaptive moment estimation optimizer algorithm is preferred.

The Adam optimizer, which absorbs advantages of Adagrad (an adaptive learning rate gradient descent algorithm) and a momentum gradient descent algorithm, can not only adapt to a sparse gradient (i.e., natural language and computer vision problems) but also alleviate the problem of gradient oscillation. The learning rate of the neural network can be adjusted by means of a gradient descent, thereby accelerating the convergence of the neural network.

For the Warmup, training at a very small learning rate (setting a minimum learning rate) is performed at the beginning of the training, so that the neural network becomes familiar with data; the learning rate is gradually increased to a certain extent (for example, meeting a preset value, or a preset condition, or a preset function relationship) as the training proceeds, and training is performed at a set initial learning rate, and after the training has been performed with a preset amount of training data, the learning rate is gradually decreased by a preset step. By the Warmup method, the convergence of the neural network can be further accelerated, and the learning rate is continuously increased at the beginning, which can relieve an overfit phenomenon of the neural network at the initial stage of training, and ensure the stability of the training of the neural network.

By the StepLR, the learning rate of the neural network can be adjusted at an equal interval, with an adjustment factor of gamma, an adjustment interval of step_size, and an interval unit of step.

By the above solutions, the neural network can be trained by using the convergence acceleration algorithm, and the convergence acceleration algorithm can be one or more of the above three, and the convergence speed can be increased once when one is added, so that in this embodiment, it is preferred that training is performed by combining all the three convergence acceleration algorithms, thereby ensuring the convergence effect and convergence speed of the neural network.

In some embodiments, the training termination condition of the neural network may be that the training data set is trained cyclically for a preset number of training epochs. The preset number of training epochs can be set or changed according to actual situations, preferably 75 epochs in this embodiment.

With the solution of the above embodiment, learning and training can be performed on a constructed neural network by using a large number of acquired watermark compressed images marked with corresponding watermark content as a training data set, so that the neural network has continuously improved accuracy of watermark restoration in the training process, and a watermark restoration model for watermark restoration on the compressed watermark image can be obtained after the training is finished. The watermark restoration model obtained with this solution can accurately perform watermark restoration on the compressed watermark image, with a highly accurate restoration effect, so that the watermark content in the compressed watermark image can be accurately restored even if it is blurred, thereby ensuring accuracy of tracing according to the watermark content.

It should be noted that the method of the embodiment of the present application may be executed by a single device, such as a computer or a server. The method of this embodiment can also be applied to a distributed scenario where the method is completed by mutual cooperation between a plurality of devices. In this distributed scenario, one device of the plurality of devices may only perform one or more steps of the method according to the embodiment of the present application, and the plurality of devices interact with each other to complete the method.

It should be noted that some embodiments of the present application have been described above. Other embodiments are within the scope of the attached claims. In some cases, the actions or steps recited in the claims may be performed in a different order than in the above embodiments and desirable results can be still achieved. In addition, the processes depicted in the accompanying drawings do not necessarily require the shown specific order or sequential order to achieve desirable results. In some embodiments, multitasking and parallel processing may also be possible or may be advantageous.

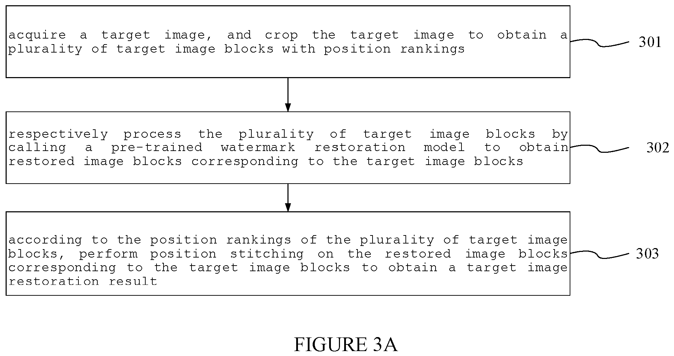

Based on the same inventive concept, an embodiment of the present application further provides a watermark restoration method, as shown in Fig. 3A, the watermark restoration method comprising:
step 301, acquiring a target image, and cropping the target image to obtain a plurality of target image blocks with position rankings.

In order to ensure that the target image can smoothly enter a watermark restoration model for processing, the target image needs to be cropped so that the target image can meet an input condition of an input layer of the watermark restoration model.

In a specific implementation, a cropping size (e.g., 48*48 or 96*96 or another size) is the same as the cropping size of the training method in the above embodiment, so that the target image obtained by the cropping processing can be smoothly input into the input layer of the watermark restoration model.

In a specific implementation, due to few watermark traces at edges of the obtained target image, these edge parts are discarded in order to avoid the influence of the edge parts on a watermark restoration rate, and the rest parts are taken as target image blocks and input to the watermark restoration model for watermark restoration.

Step 302, respectively processing the plurality of target image blocks by calling a pre-trained watermark restoration model to obtain restored image blocks corresponding to the target image blocks; wherein, the watermark restoration model is trained based on a watermark image set synthesized by predefined watermark style information and background style information, and the watermark restoration model is used for restoring visible watermark characters in the image.

The specific training process is as described in the training method for a watermark restoration model in the above embodiment, and has technical effects corresponding to the above training method, which are not repeated here.

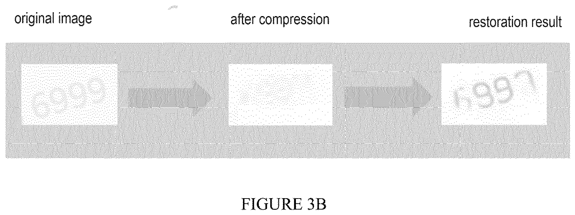

In a specific implementation, the target images are input into the input layer of the watermark restoration model, these target images are transferred to a hidden layer for processing through the input layer, the hidden layer sends processing results to an output layer, and the output layer arranges the processing results to obtain restored watermark images for output. As shown in Fig. 3B, there show a state of a watermark image with "6999" after compression and a state thereof after watermark restoration by a watermark restoration model.

The target image is input into the watermark restoration model for watermark restoration processing, a restored watermark image is amplified by a factor of a preset scale as the restored watermark image, and the restored watermark image is output, wherein an output scale of the watermark restoration model is preset as the preset scale.

In a specific implementation, in order to ensure the definition of the image, the restored watermark image must be amplified, and a specific amplification factor (output scale) may be set or modified according to actual needs of a user, a default value or preferred value of the preset scale being generally set to scale=2.

Step 303, according to the position rankings of the plurality of target image blocks, performing position stitching on the restored image blocks corresponding to the target image blocks to obtain a target image restoration result.

In some embodiments, for the image after the position stitching, a contrast of the visible-watermark character part in the image is adjusted and filtering and sharpening processing is performed on the image.

In a specific implementation, the output watermark restoration image blocks are stitched according to the position rankings of the plurality of target image blocks, and after the stitching, a contrast of the watermark part is adjusted or further filtering and sharpening are performed, making the watermark content clearer and more visible. The processed watermark restoration image is stitched with the discarded edge parts according to corresponding positions to form a complete watermark restoration image of a final version.

With the solution of the above embodiment, watermark restoration can be performed accurately on the compressed watermark image by using the watermark restoration model, with a highly accurate restoration effect, so that the watermark content in the compressed watermark image can be accurately restored even if it is blurred, thereby ensuring the accuracy of tracing according to the watermark content.

It should be noted that the method of the embodiment of the present application may be executed by a single device, such as a computer or a server. The method of this embodiment can also be applied to a distributed scenario where the method is completed by mutual cooperation between a plurality of devices. In this distributed scenario, one device of the plurality of devices may only perform one or more steps of the method according to the embodiment of the present application, and the plurality of devices interact with each other to complete the method.

It should be noted that some embodiments of the present application have been described above. Other embodiments are within the scope of the attached claims. In some cases, the actions or steps recited in the claims may be performed in a different order than in the above embodiments and desirable results can be still achieved. In addition, the processes depicted in the accompanying drawings do not necessarily require the shown specific order or sequential order to achieve desirable results. In some embodiments, multitasking and parallel processing may also be possible or may be advantageous.

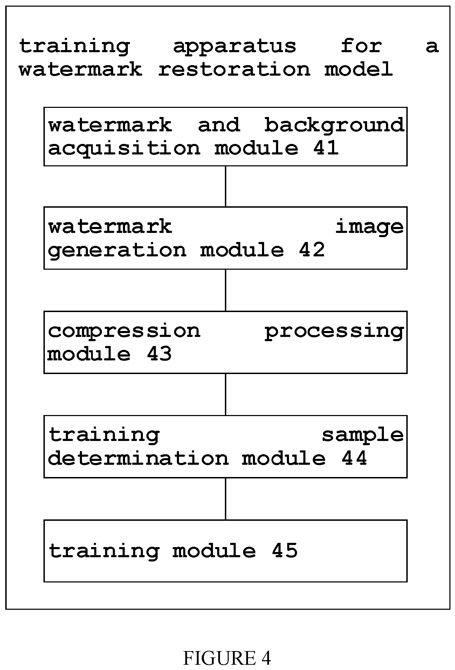

Based on the same inventive concept, corresponding to the training method of any of the above embodiments, an embodiment of the present application further provides a training apparatus for a watermark restoration model, by referring to Fig. 4, comprising:
a watermark and background acquisition module 41, configured to acquire watermark style information and background style information, the watermark style information being used for indicating a visible-watermark character content style; and the background style information being used for indicating a background image content style;
a watermark image generation module 42, configured to generate a watermark image set according to a combination of the watermark style information and the background style information, the watermark image set comprising a plurality of images with visible watermarks;
a compression processing module 43, configured to compress a watermark image in the watermark image set to obtain a corresponding watermark compressed image, and respectively crop the watermark image and the corresponding watermark compressed image to obtain a plurality of watermark image blocks corresponding to the watermark image and a plurality of watermark compressed image blocks in position correspondence with the watermark image blocks;
a training sample determination module 44, configured to, by using the watermark compressed image blocks as training samples and using watermark image blocks in position correspondence with the watermark compressed image block as sample labels, combine the training samples and the sample labels corresponding to the training samples to generate a training data set; and
a training module 45, configured to construct a neural network model, and train the neural network model by means of a convergence acceleration algorithm by calling the training data set to obtain a neural network model meeting a training termination condition as a watermark restoration model, the watermark restoration model being used for restoring visible-watermark characters in the image.

In some embodiments, the watermark and background acquisition module 41 is further configured to:
present a watermark style information configuration interface and a background style information configuration interface, the watermark style information configuration interface being used for configuring at least one of watermark content, watermark color, watermark font, watermark size, or watermark gradient; and the background style information interface being used for configuring background color and/or background content; and
receive the watermark style information configured by a user by means of the watermark style information configuration interface, and receive the background style information configured by the user by means of the background style information configuration interface.

In some embodiments, the apparatus further comprises: an adjustment module configured to:
before the compressing a watermark image in the watermark image set to obtain a corresponding watermark compressed image, randomly adjust the watermark image in the watermark image set by calling a watermark adjustment strategy to obtain an adjusted watermark image set, the watermark adjustment strategy being used for randomly extracting the watermark image and randomly adjusting at least one dimension of watermark font size, watermark transparency, watermark gradient, or watermark position.

In some embodiments, the training module 45 is further configured to:
construct a deep super-resolution model based on a neural network; and call the training data set and perform training iteration on the deep super-resolution model by means of an adaptive moment estimation optimizer to obtain the model meeting the training termination condition as the watermark restoration model.

For convenience of description, when the above apparatus is described, various modules divided by functions are described respectively. Of course, in implementing the present application, the functions of the modules may be implemented in the same or multiple software and/or hardware.

The apparatus of the above embodiment is used for implementing the corresponding training method in any of the above embodiment, and has the beneficial effects of the corresponding training method embodiment, which are not repeated here.

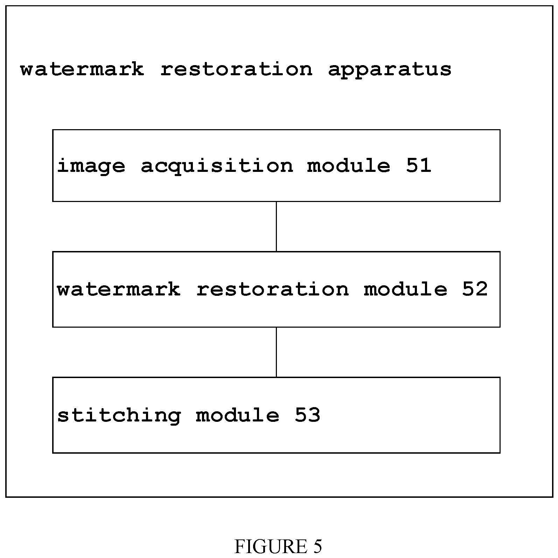

Based on the same inventive concept, this embodiment provides a watermark restoration apparatus, as shown in Fig. 5, comprising:
an image acquisition module 51, configured to acquire a target image, and crop the target image to obtain a plurality of target image blocks with position rankings;
a watermark restoration module 52, configured to respectively process the plurality of target image blocks by calling a pre-trained watermark restoring model to obtain restored image blocks corresponding to the target image blocks; wherein, the watermark restoration model is trained based on a watermark image set synthesized by predefined watermark style information and background style information, and the watermark restoration model is used for restoring visible watermark characters in the image; and
a stitching module 53, configured to, according to the position rankings of the plurality of target image blocks, perform position stitching on the restored image blocks corresponding to the target image blocks to obtain a target image restoration result.

In some embodiments, the apparatus further comprises: an adjustment processing module, configured to:
after the position stitching, for the image after the position stitching, adjust a contrast of a visible-watermark character part in the image and perform filtering and sharpening processing on the image.

In some embodiments, the image acquisition module 51 is further configured to: when the cropping is performed, remove an edge part of the target image first, and then perform the cropping according to a size requirement of the watermark restoration model.

For convenience of description, when the above apparatus is described, various modules divided by functions are described respectively. Of course, in implementing the present application, the functions of the modules may be implemented in the same or multiple software and/or hardware.

The apparatus in the above embodiment is configured to implement the corresponding watermark restoration method in any of the above embodiments, and has the beneficial effects of the corresponding watermark restoration method embodiment, which are not repeated here.

Based on the same inventive concept, corresponding to the method of any of the above embodiments, the present application further provides an electronic device, comprising a memory, a processor, and a computer program stored on the memory and executable on the processor, the processor, when executing the program, implementing the method of any of the above embodiments.

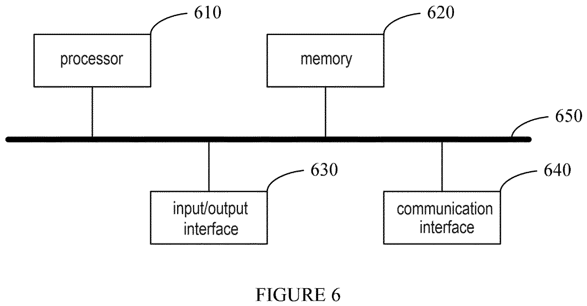

Fig. 6 illustrates a schematic diagram of a more specific hardware structure of an electronic device according to this embodiment, which may comprise: a processor 610, a memory 620, an input/output interface 630, a communication interface 640, and a bus 650. The processor 610, memory 620, input/output interface 630, and communication interface 640 are communicatively connected with each other within the device via the bus 650.

The processor 610 may be implemented by using a general-purpose CPU (Central Processing Unit), a microprocessor, an application specific integrated circuit (ASIC), one or more integrated circuits, or the like, for executing related programs to implement the technical solutions provided in the embodiments of this description.

The memory 620 may be implemented in a form of a ROM (Read Only Memory), a RAM (Random Access Memory), a static storage device, a dynamic storage device, or the like. The memory 620 may store an operating system and other applications, and when the technical solutions provided by the embodiments of this description are implemented by software or firmware, related program code is stored in the memory 620 and called and executed by the processor 610.

The input/output interface 630 is used for connecting an input/output module to perform information input and output. The input/output module, as a component, may be configured within the device (not shown in the figure), or may be externally connected to the device to provide corresponding functions. An input device may include a keyboard, mouse, touch screen, microphone, various sensors, etc., and an output device may include a display, speaker, vibrator, indicator light, etc.

The communication interface 640 is used for connecting a communication module (not shown in the figure) to perform communication interaction between this device and another device. The communication module can perform communication in a wired mode (for example, a USB, data cable, etc.), or in a wireless mode (for example, a mobile network, WIFI, Bluetooth, etc.).

The bus 650 includes a path through which information between various components (such as the processor 610, memory 620, input/output interface 630, and communication interface 640) of the device is transmitted.

It should be noted that although the above device only shows the processor 610, the memory 620, the input/output interface 630, the communication interface 640 and the bus 650, in a specific implementation, the device may also include other components necessary for normal operation. In addition, those skilled in the art can appreciate that the above device may also include only the components necessary to implement the solutions of the embodiments of this description, without necessarily including all the components shown in the figures.

The electronic device of the above embodiment is used for implementing the corresponding method in any one of the foregoing embodiments, and has the beneficial effects of the corresponding method embodiment, which are not repeated here.

Based on the same inventive concept, corresponding to any of the above embodiments, the embodiments of the present application further provide a non-transitory computer-readable storage medium storing computer instructions, for causing a computer to perform the method according to any of the above embodiments.

The computer-readable medium of this embodiment includes permanent and non-permanent, removable and non-removable media, for information storage in any method or technology. The information may be computer-readable instructions, data structures, modules of a program, or other data. Examples of a storage medium of a computer include, but are not limited to, a phase-change memory (PRAM), static random access memory (SRAM), dynamic random access memory (DRAM), other type of random access memory (RAM), read only memory (ROM), electrically erasable programmable read only memory (EEPROM), flash memory or other memory technology, compact disc read only memory (CD-ROM), digital versatile disc (DVD) or other optical storage, magnetic cassette, magnetic tape and magnetic disk storage or other magnetic storage device, or any other non-transmission medium, which can be used for storing information that can be accessed by a computing device.

The computer instructions stored in the storage medium of the above embodiment are used for causing the computer to perform the method according to any of the above embodiments, and have the beneficial effects of the corresponding method embodiments, which are not repeated here.

Based on the same inventive concept, corresponding to any of the above embodiments, an embodiment of the present application also provides a computer program product, comprising computer program instructions which, when run on a computer, cause a computer to perform the method of any of the above embodiments.

Those of ordinary skill in the art should understand that: the discussion of any embodiment above is exemplary only, and is not intended to imply that the scope (including the claims) of the present application is limited to these examples; and under the ideas of the present application, the above embodiments or the technical features in different embodiments may also be combined, the steps may be executed in any order, and there are many other changes in the different aspects of the embodiments of the present application as described above, which are not provided in detail for the sake of brevity.

In addition, in order to simplify the illustration and discussion, and not to obscure the embodiments of the present application, well-known power/ground connections to integrated circuit (IC) chips and other components may or may not be shown in the provided drawings. In addition, the apparatus may be shown in a form of a block diagram so as to avoid obscuring the embodiments of the present application, and this also takes into account the fact that the details of the implementation of these block diagram apparatuses are highly dependent upon a platform on which the embodiments of the present application are to be implemented (i.e., these details should be fully within the understanding scope of those skilled in the art) . In the case where specific details (e.g., circuits) are set forth to describe the exemplary embodiments of the present application, it should be apparent to those skilled in the art that the embodiments of the present application can be implemented without, or with variation of, these specific details. Therefore, these descriptions should be regarded as illustrative rather than restrictive.

While the present application has been described in conjunction with specific embodiments thereof, many substitutions, modifications, and variations of these embodiments will be apparent to those skilled in the art in light of the foregoing description. For example, the embodiments discussed may be used in other memory architectures (e.g., a dynamic RAM (DRAM)).
The embodiments of the present application are intended to cover all such substitutions, modifications and variations which fall within the broad scope of the attached claims. Therefore, any omission, modification, equivalent substitution, improvement, etc. made within the spirit or principles of the embodiments of the present application shall be included within the scope of protection of the present application.

## Claims

1. A training method for a watermark restoration model, comprising:
acquiring watermark style information and background style information, the watermark style information being used for indicating a visible-watermark character content style and the background style information being used for indicating a background image content style;
generating a watermark image set according to a combination of the watermark style information and the background style information, the watermark image set comprising a plurality of images with visible watermarks;
compressing a watermark image in the watermark image set to obtain a corresponding watermark compressed image, and respectively cropping the watermark image and the corresponding watermark compressed image to obtain a plurality of watermark image blocks corresponding to the watermark image and a plurality of watermark compressed image blocks in position correspondence with the watermark image blocks;
by using the watermark compressed image blocks as training samples and using the watermark image blocks in position correspondence with the watermark compressed image blocks as sample labels, combining the training samples and the sample labels corresponding to the training samples to generate a training data set; and
constructing a neural network model, and training the neural network model by means of a convergence acceleration algorithm by calling the training data set to obtain a neural network model meeting a training termination condition as a watermark restoration model, the watermark restoration model being used for restoring visible-watermark characters in the image.

2. The method according to claim 1, wherein, the acquiring watermark style information and background style information, comprises:
presenting a watermark style information configuration interface and a background style information configuration interface; the watermark style information configuration interface being used for configuring at least one of watermark content, watermark color, watermark font, watermark size, or watermark gradient; and the background style information interface being used for configuring background color and/or background content; and
receiving the watermark style information configured by a user by means of the watermark style information configuration interface, and receiving the background style information configured by the user by means of the background style information configuration interface.

3. The method according to claim 1, wherein, before the compressing a watermark image in the watermark image set to obtain a corresponding watermark compressed image, the method further comprises:
randomly adjusting the watermark image in the watermark image set by calling a watermark adjustment strategy to obtain an adjusted watermark image set, the watermark adjustment strategy being used for randomly extracting the watermark image and randomly adjusting at least one dimension of watermark font size, watermark transparency, watermark gradient, or watermark position.

4. The method according to claim 1, wherein the constructing a neural network model, and training the neural network model by means of a convergence acceleration algorithm by calling the training data set to obtain a neural network model meeting a training termination condition as a watermark restoration model, comprises:
constructing a deep super-resolution model based on a neural network; and
calling the training data set and performing training iteration on the deep super-resolution model by means of an adaptive moment estimation optimizer to obtain the model meeting the training termination condition as the watermark restoration model.

5. A watermark restoration method, comprising:
acquiring a target image, and cropping the target image to obtain a plurality of target image blocks with position rankings;
respectively processing the plurality of target image blocks by calling a pre-trained watermark restoration model to obtain restored image blocks corresponding to the target image blocks; wherein, the watermark restoration model is trained based on a watermark image set synthesized by predefined watermark style information and background style information, and the watermark restoration model is used for restoring visible-watermark characters in the image; and
according to the position rankings of the plurality of target image blocks, performing position stitching on the restored image blocks corresponding to the target image blocks to obtain a target image restoration result.

6. The method according to claim 5, wherein after the position stitching, the method further comprises:
for the image after the position stitching, adjusting a contrast of a visible-watermark character part in the image and performing filtering and sharpening processing on the image.

7. The method according to claim 5, wherein the method further comprises:
when the cropping is performed, removing an edge part of the target image first, and then performing the cropping according to a size requirement of the watermark restoration model.

8. A training apparatus for a watermark restoration model, comprising:
a watermark and background acquisition module, configured to acquire watermark style information and background style information, the watermark style information being used for indicating a visible-watermark character content style and the background style information being used for indicating a background image content style;
a watermark image generation module, configured to generate a watermark image set according to a combination of the watermark style information and the background style information, the watermark image set comprising a plurality of images with visible watermarks;
a compression processing module, configured to compress a watermark image in the watermark image set to obtain a corresponding watermark compressed image, and respectively crop the watermark image and the corresponding watermark compressed image to obtain a plurality of watermark image blocks corresponding to the watermark image and a plurality of watermark compressed image blocks in position correspondence with the watermark image blocks;
a training sample determination module, configured to, by using the watermark compressed image blocks as training samples and using the watermark image blocks in position correspondence with the watermark compressed image blocks as sample labels, combine the training samples and the sample labels corresponding to the training samples to generate a training data set; and
a training module, configured to construct a neural network model, and train the neural network model by means of a convergence acceleration algorithm by calling the training data set to obtain a neural network model meeting a training termination condition as a watermark restoration model, the watermark restoration model being used for restoring visible-watermark characters in the image.

9. A watermark restoration apparatus, comprising:
an image acquisition module, configured to acquire a target image, and crop the target image to obtain a plurality of target image blocks with position rankings;
a watermark restoration module, configured to respectively process the plurality of target image blocks by calling a pre-trained watermark restoration model to obtain restored image blocks corresponding to the target image blocks; wherein, the watermark restoration model is trained based on a watermark image set synthesized by predefined watermark style information and background style information, and the watermark restoration model is used for restoring visible-watermark characters in the image; and
a stitching module, configured to, according to the position rankings of the plurality of target image blocks, perform position stitching on the restored image blocks corresponding to the target image blocks to obtain a target image restoration result.

10. An electronic device, comprising a memory, a processor, and a computer program stored on the memory and executable on the processor, **characterized in that**, the processor, when executing the program, implements the method according to any of claims 1 to 7.

11. A non-transitory computer-readable storage medium storing computer instructions, **characterized in that**, the computer instructions cause a computer to perform the method according to any of claims 1 to 7.

12. A computer program product comprising computer program instructions which, when run on a computer, cause the computer to perform the method according to any of claims 1 to 7.
